(19) Europäisches Patentamt / European Patent Office / Office européen des brevets

(11) **EP 4 345 561 A1**

(12) **EUROPEAN PATENT APPLICATION**

(43) Date of publication:
03.04.2024 Bulletin 2024/14

(21) Application number: 22199106.0

(22) Date of filing: 30.09.2022

(51) International Patent Classification (IPC):
*G05B 23/02* (2006.01)  *G01H 1/00* (2006.01)

(52) Cooperative Patent Classification (CPC):
G01H 1/00; G05B 23/0221

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
• **Decker, Thomas**
 **85716 Unterschleißheim (DE)**
• **Lebacher, Michael**
 **84513 Töging am Inn (DE)**
• **Rieskamp, Timo**
 **90408 Nürnberg (DE)**

(74) Representative: **Siemens Patent Attorneys Postfach 22 16 34 80506 München (DE)**

(54) **METHOD AND MONITORING SYSTEM FOR DETECTING A FAULT IN A MACHINE**

(57) A method for detecting a fault in a machine (700), comprising the steps:
a) receiving (S1) a vibration signal (100) recorded by one or more sensors (706) sensing a vibration of the machine (700) ;
b) determining (S2) a true fault signal (102) by applying a neural network (104) to the vibration signal (100); and
c) applying (S3) an envelope spectrum analysis (106) to the true fault signal (102) to detect the fault.

The present solution combines the well-established approach of envelope spectrum analysis with the advantages of machine learning.

FIG 1

**Description**

The present invention relates to a method for detecting a fault in a machine, to a monitoring system and to a computer program product.

Sensors are omnipresent in all kinds of heavy machinery, motors, etc. and are, therefore, highly relevant for many different business fields. One especially important application field of sensors is detecting faults in rotating parts in machinery such as motors, turbines, and pumps etc.

Faults in rotating mechanical components, like gears or bearings, are among the most common causes of malfunction for rotating equipment. This malfunction can be detected in vibration patterns. To obtain the required information, sensors such as position transducers, velocity sensors, accelerometers and spectral emitted energy sensors can be installed either directly on the rotating part or mounted on these machines. This allows to obtain measurements that can be used for vibration analysis by extracting vibration frequencies and amplitudes. If the rotating elements are subject to different damages, geometrical imperfections or malfunction, the sensor values typically represent suspicious patterns and anomalies.

While there exist multiple tools and methods derived from physical theory that would allow, in principle, to obtain this information from the sensor measurements, this is still a very challenging task. Also, there are multiple problems related to detecting rotating element faults from sensor data that still need to be solved. Sensor time series are (a) only indirect measurements of real physical mechanisms and (b) the measured sensor data is overlaid by a multitude of other effects (for example induced by a load on the motor), which have to be filtered out at great expense. (c) In addition, in order to accurately detect and classify the damage in the spectrum, the exact geometries of the installed bearing must be known, which is usually not the case.

Also, the application of more powerful machine learning algorithm has been promoted (Liu, R., Yang, B., Zio, E., & Chen, X. (2018). Artificial intelligence for fault diagnosis of rotating machinery: A review. Mechanical Systems and Signal Processing, 108, 33-47.). However, such methods are often not human-understandable, often called black-box algorithms. This means that it is not possible to understand how the model behaves, why the model predicts faults and consequently whether the results of the algorithm are in line with existing domain knowledge about the problem. This leads to obstacles for the developers to build a better and more robust models and domain experts (Engineers and Physicists) to understand and trust the results. It also leads to problems with the detection of root-causes for faults.

It is therefore one object of the present invention to provide an improved approach to fault detection in a machine.

According to a first aspect, there is provided a method for detecting a fault in a machine, comprising the steps:

  a) receiving a vibration signal recorded by one or more sensors sensing a vibration of the machine;
  b) determining a true fault signal by applying a neural network to the vibration signal; and
  c) applying an envelope spectrum analysis to the true fault signal to detect the fault.

Envelope spectrum analysis comprises a set of signal processing steps and can be considered as one of the most popular techniques to identify faults in vibration signals of rotating elements, like bearing or gears (Randall, R. B., & Antoni, J. (2011). Rolling element bearing diagnostics-A tutorial. Mechanical systems and signal processing, 25(2), 485-520). This is due to the fact that all analysis steps are well justified by the physical domain knowledge.

Obtaining information about the frequency of impulse pulses from a raw vibration signal may be hard as it is an amplitude modulated version of the signal of interest. Therefore, it is advantageous to rather analyze a demodulated version of the signal such as the signal envelope (as done in envelope spectrum analysis). The signal envelope can be viewed as a modified version of the vibration signal in which the presence of characteristic impulses caused by faults are more pronounced. Therefore, a defect may be detected by checking whether a characteristic frequency is present in the envelope spectrum of the measured vibration signal.

However, the success of envelope spectrum analysis may be limited due to the presence of various additional vibrations that could potentially mask the fault signals. Such disturbances could for example result from deterministic vibrations caused by other machine parts like shafts or simply from other background noise.

The present solution advantageously combines the well-established approach of envelope spectrum analysis with the powers of machine learning. Machine learning here is used to provide the envelope spectrum analysis with improved data termed "true fault signal". In particular, a noise content in the true fault signal is reduced when compared to the vibration signal by applying the neural network to the vibration signal. Put differently, those frequencies which are relevant for fault detection are more pronounced in the true fault signal.

The vibration signal may be a raw vibration signal or a preprocessed signal (e.g., using conventional processing techniques such as filtering)

Sensors used in sensing vibration may be accelerometers, for example.

The fault may be detected by identifying one or more (pronounced) fault frequencies in the envelope spectrum.

According to an embodiment, the neural network in step b) is an unsupervised neural network.

Thus, no labeled data is required, simplifying training significantly.

According to a further embodiment, the unsupervised neural network is designed to determine the true fault signal such that an impulsive component in the true fault signal is maximized.

By increasing the impulsive component, the signal part relevant for fault detection is increased. The reason is that fault signals are typically impulsive. In one embodiment, the unsupervised neural network is designed to determine the true fault signal such that an impulsive component in the true fault signal is increased compared to the vibration signal.

According to a further embodiment, the unsupervised neural network is designed to determine the true fault signal such that a difference between the true fault signal and the vibration signal is minimized.

This ensures that the true fault signal still adequately represents the vibration signal.

According to a further embodiment, the unsupervised neural network is designed such that:

$$\min_{\theta}(\lambda_1 d(SEN_\theta(x), x) - \lambda_2 imp(SEN_\theta(x)))$$

wherein:

$\lambda_1$ and $\lambda_1$ are hyperparameters,
$SEN_\theta$ is the unsupervised neural network,
$x$ is the vibration signal,
$\theta$ is a set of parameters including the weights and biases of $SEN_\theta$, wherein $\theta$ is adjusted during unsupervised learning,
$d()$ is a distance function configured to determine the difference between the true fault signal and the vibration signal, and
$imp()$ is a function to determine the impulsive component in the true fault signal.

This function represents a cost function used in the learning (optimization) of the neural network (SEN). It is advantageous as it ensures increased impulsivity while at the same time staying true to the original vibration signal.

According to a further embodiment, the function $d()$ is designed to determine the L1 norm, the Euclidean norm, distances in the frequency spectrum and/or kernel based distances.

Experiments have shown that, with this function $d()$, an adequate representation of the (raw) vibration signal is found.

According to a further embodiment, the function $d()$ is a further neural network.

The function $d()$ may be determined using a supervised or unsupervised neural network.

According to a further embodiment, the function $imp()$ is designed to determine kurtosis, entropy or non-gaussianity.

The inventors found that using this function $imp()$ the fault frequencies in the true fault signal were particularly well identifiable. One example of a non-gaussianity function is log(cosh()).

According to a further embodiment, the unsupervised neural network is a deep, convolutional or recurrent neural network.

In experiments the inventors found that a convolutional neural network, in particular a combination of convolutional neural networks, provided particularly good results. According to an embodiment, the unsupervised neural network comprises a convolutional layer followed by a transposed convolutional layer network. A rectified linear unit may be used in between the convolutional layer and the transposed convolutional layer. The convolutional layer, the rectified linear unit and the transposed convolutional layer may form a block. Two or more such blocks may form the unsupervised neural network. Filter sizes of the neural network or layer may range, for example, from 1 to 100, preferably 5 to 25. In one embodiment, the number of filters employed ranges from 5 to 50, or 10 to 20, for example.

According to a further embodiment, the envelope spectrum analysis comprises:

determining a vibration envelope of the true fault signal,
determining a frequency spectrum of the vibration envelope,
determining one or more significant frequencies in the frequency spectrum and associating the one or more significant frequencies with known fault frequencies.

The rich domain knowledge available in envelope spectrum analysis about known faults can be used in fault identification.

According to a further embodiment, the machine comprises a rotating machine element.

For example, the machine element is a bearing, in particular a roller element bearing. The vibration may result from a defect on the rolling element, the race or cage, for example.

According to a further aspect, there is provided a monitoring system for detecting a fault in a machine, comprising:

a receiving unit for receiving a vibration signal recorded by sensors sensing a vibration of the machine;
a determining unit for determining a true fault signal by applying a neural network to the vibration signal; and
an application unit for applying an envelope spectrum analysis to the true fault signal to detect the fault.

The respective unit, e.g., the receiving unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

According to a further aspect, there is provided a computer program product comprising instructions which, when the program is executed by a computer, cause the computer to carry out the above method.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Any embodiment of the first aspect may be combined with any embodiment of the further aspects to obtain another embodiment of the first aspect, and vice versa.

"A" used herein does not preclude that more than one element is present.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1     shows different signals employed in the method according to one embodiment;

Fig. 2     shows a flow chart of a method corresponding to Fig. 1;

Fig. 3     shows details of an unsupervised neural network used in the present method according to one embodiment;

Fig. 4     shows a comparison of the raw vibration signal and the true fault signal according to one experiment;

Fig. 5     shows the noise that has been removed from the true fault signal of Fig. 4;

Fig. 6     shows the envelop spectrum for the raw vibration signal and the true fault signal of Fig. 4; and

Fig. 7     shows a monitoring system according to an embodiment.

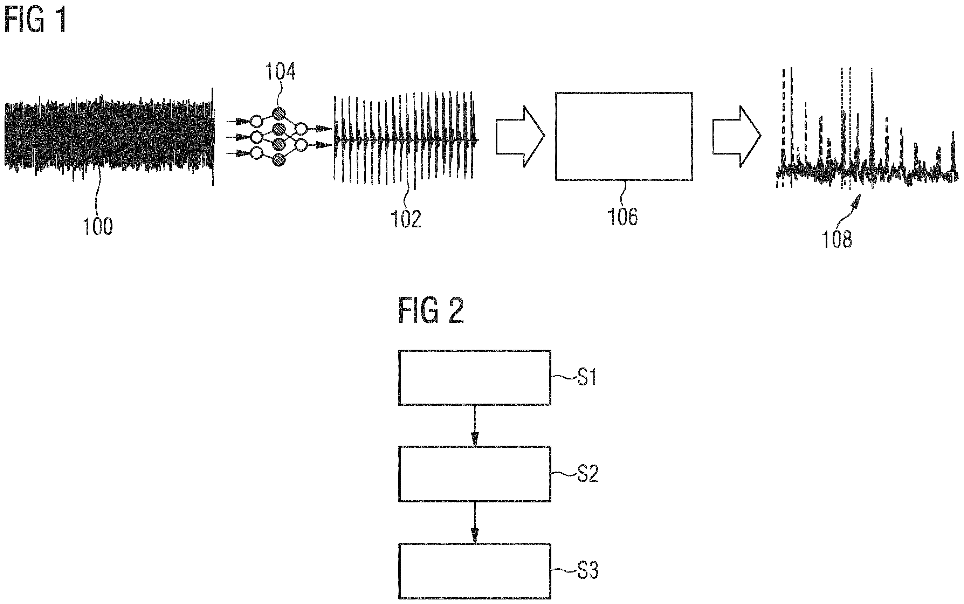

In the Figures, like reference numerals designate like or functionally equivalent elements, unless otherwise indicated. Fig. 1 shows a raw vibration signal 100 which has been recorded by sensors. The sensors, e.g., accelerometers, may be attached to a machine or otherwise record its vibration. The machine may be a rotating machine, in particular a motor, turbine or the like, comprising one or more bearings, for example.

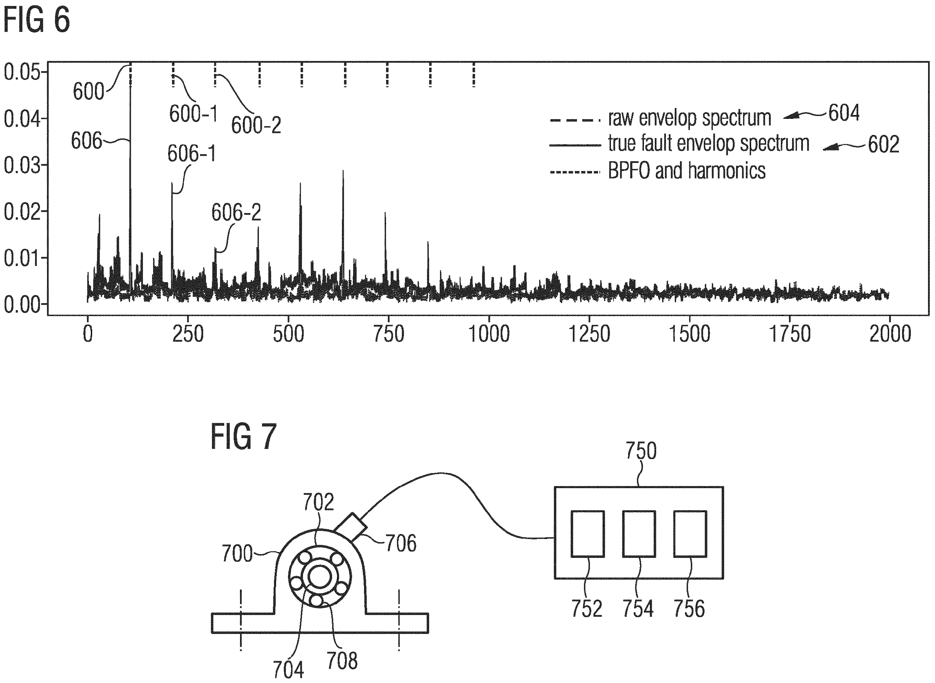

Fig. 7 shows a bearing housing 700 housing a ball bearing 702. The ball bearing 702 holds a rotating shaft 704. An accelerometer 706 is attached to the bearing housing 700 and detects vibrations including vibrations of individual balls one of which is indicated by reference numeral 708.

Fig. 7 further illustrates a monitoring system 750 which may include a processing unit such as a microprocessor and memory. The monitoring system 750 comprises a receiving unit 752, a determining unit 754 and an application unit 756. The monitoring system 750 may also include the accelerometer 706, or any other vibration sensor.

The detected raw vibration signal 100 is received by the receiving unit 752. This corresponds to step S1 of Fig. 2 illustrating a flow chart.

In step S2, the determining unit 754 determines a true fault signal 102 by applying a neural network 104 to the vibration signal 100.

Next (step S3 of Fig. 2), the application unit 756 applies an envelope spectrum analysis 106 to the true fault signal 102. The envelope spectrum analysis 106 (e.g., an algorithm) outputs, for example, a frequency spectrum 108. In particular, the envelope spectrum analysis 106 comprises: determining a vibration envelope of the true fault signal 102, determining a frequency spectrum 108 of the vibration envelope, determining one or more significant frequencies in the frequency spectrum 108 and associating the one or more significant frequencies with known fault frequencies. For example, from domain knowledge, it is known that typically faults in roller bearings are to be identified at the ball pass frequency. This knowledge may then be used to determine whether or not a fault is present in the frequency spectrum 108. This identification may be done automatically by the monitoring system 750.

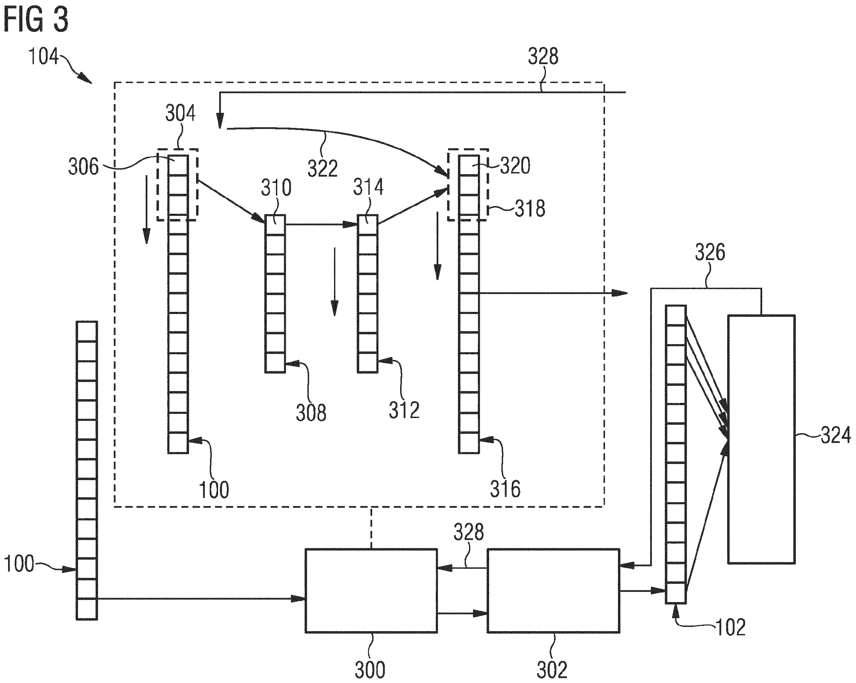

Fig. 3 illustrates details of one embodiment of a neural network 104 used in step S2 above.

The neural network 104 is an unsupervised neural network. In other embodiments, for example in addition to the neural network 104, a supervised neural network is used.

The neural network 104 comprises two blocks 300 and 302. More than two blocks for example 5 or 10 may be used in other embodiments. Each block 300, 302 may be configured in the same way, except for some differences which will be elaborated hereinafter. Therefore, the description focuses, by way of example, on block 300, but equally applies to block 302.

Block 300 comprises, as shown in the dash-dotted box, a convolution layer comprising 64 filters, one of which is denoted with reference numeral 304 in Fig. 3. The number of filters may vary in different embodiments. The size of the filters may vary as well. In this experiment, a filter size of 10 was chosen, meaning that the filter reads 10 values 306 from the vibration signal 100. The vibration signal 100 may be provided as a 1-dimensional array comprising amplitude values sampled at a fixed sampling rate.

Each filter comprises weights which are then used to calculate a feature map 308. Initially, the weights are set using random numbers or statistical methods. One value of the feature map 308 calculated using the filter 304 is denoted by reference numeral 310. The filter 304 is then moved to the next position on the array and a further value of the feature map 308 is calculated. Once the entire array has been read, this process is repeated for the next filter (having e.g. different weights compared to the previous filter).

Using a rectified linear unit applied to each value 310 in the feature map 308, a rectified feature map 312 is calculated. The rectified value calculated for the value 310 is indicated at 314. A rectified linear unit (also known as rectifier) is an activation function defined as the positive part of its argument.

Using a transposed convolutional layer an enhanced fault signal 316 is determined. The transposed convolutional layer again uses 64 filters having a size of 10 values, for example. One filter 318 of the transposed convolutional layer is shown in Fig. 3. Using the filter 318 10 values 320 are calculated for each value 314 in the rectified feature map 312. This step is repeated for each value in the rectified feature map 312. The filters 304 of the transposed convolutional layer preferably use the same weights as the filters 318 of the convolutional layer. To this end, a process known as weight sharing is used which is denoted with reference numeral 322.

The enhanced fault signal 316 is then passed on to block 302 which repeats the steps explained above, however, it may use a fewer number of filters, e.g., 16 in this example. Thus, the block 302 has the enhanced fault signal 316 as an input and outputs the true fault signal 102.

Based on the true fault signal 102, the cost function 324 is calculated as:

$$\min_{\theta}(\lambda_1 d(SEN_\theta(x), x) - \lambda_2 imp(SEN_\theta(x)))$$

wherein:

$\lambda_1$ and $\lambda_2$ are hyperparameters,
$SEN_\theta$ is the unsupervised neural network 104,
x is the vibration signal 100,
$\theta$ is a set of parameters including the weights and biases of $SEN_\theta$, wherein $\theta$ is adjusted during unsupervised learning,
d() is a distance function configured to determine the difference between the true fault signal 102 and the vibration signal 100, and
imp() is a function to determine the impulsive component in the true fault signal 102.

Here, the function d() describes a suitable distance metric, for instance the Euclidean norm or kernel-based distances, such that minimizing it ensures that the reconstructed signal still relates to the original one and does not become arbitrary. In situations where simple distance metrics appear to be not expressive enough, d() can also include more complex transformations or additional neural networks. The second term, imp(), can be replaced with any impulsivity measure and maximizing it is equivalent to finding the minimum of its negative. The log(cosh)-function provides for a more stable approximation of the kurtosis.

In the embodiment, the following parameters / functions were used:

$$\lambda_1 = \lambda_2 = 1$$

$$d(SEN_\theta(x), x) = ||SEN_\theta(x) - x||_2$$

$$imp\big(SEN_\theta(x)\big) = \log\left(\cosh\left(SEN_\theta(x)\right)\right)$$

Now, the parameters, such as the weights and biases, of the neural network 104 (such as the weights of the filters of the convolutional layer in block 302) are adjusted as indicated with the arrow 326. In particular, using backpropagation, the weights in the filters of the convolutional layer in block 300 are adjusted based on the (new) weights used in block 302 as indicated with reference numeral 328.

Using the adjusted parameters, a new true fault signal 102 is calculated and the cost function 324 is evaluated again. This process is repeated for, for example, 100 iterations. Then, the true fault signal 102 for which the cost function was found to be minimal is used in the spectrum analysis 106. This may be the parameter set corresponding to the last iteration but may also be a prior iteration.

In one embodiment, the cost function 324 is defined as follows:

$$\min_\theta \sum_{x \in D} \lambda_1 d(SEN_\theta(x), x) - \lambda_2 imp(SEN_\theta(x))$$

Here, the difference with respect to the previous cost function is that the (total raw) vibration signal 100 corresponds to D. More generally put, D specifies the set of training data used to train the network 104. Further, D comprises multiple signal portions x with fixed length from the same machine 700 recorded during operation.

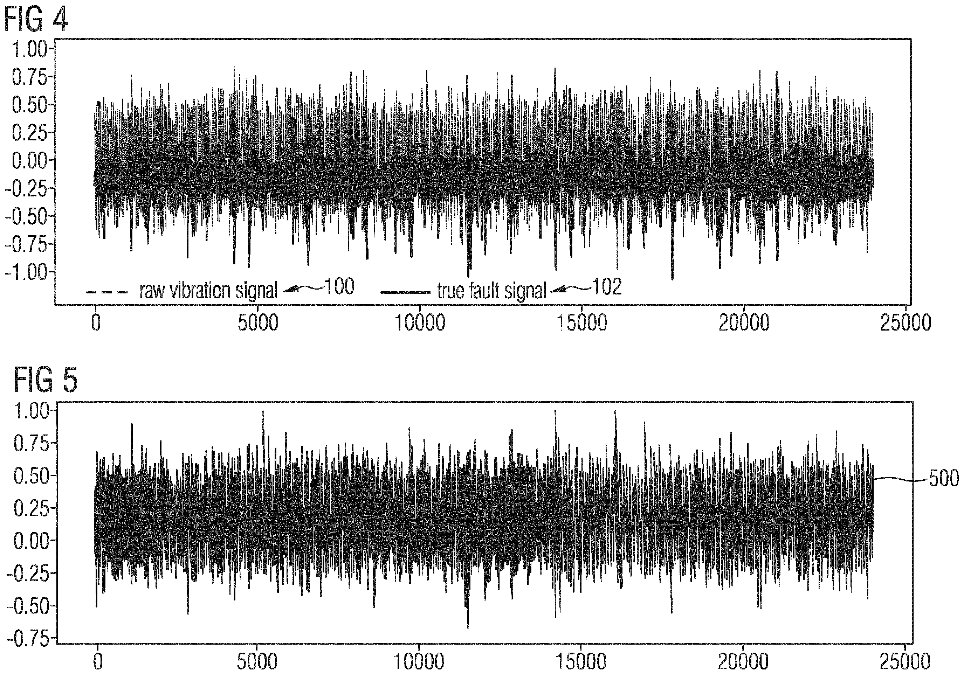

Fig. 4 shows - illustrating amplitude on the y-axis and frequency on the x-axis (the same is the case with Fig. 5 and 6) - a raw vibration signal 100 recorded from a bearing with outer ring fault and the true fault signal 102 after applying the neural network 104. The true fault signal 102 is evidently more impulsive than the raw vibration signal 100 indicating that the fault characteristics are more pronounced.

Fig. 5 depicts the difference 500 between the raw vibration signal 100 and the true fault signal 102 which represents the amount of noise that is filtered by the neural network 104.

Fig. 6 shows the envelop spectrum 604 of the raw vibration signal 100 and the envelop spectrum 602 of the true fault signal 102. In order to diagnose an outer ring fault clear peaks at the characteristic frequency BPFO (ball pass frequency outer ring - indicated at 600) as well as its harmonics (2xBPFO, 3xBPFO, ... - indicated at 600-1, 600-2) need to be visible. As one can clearly see, corresponding peaks 606, 606-1, 606-2 (also termed "significant frequencies" herein) are significantly stronger for the true fault envelop spectrum 602, whereas the envelop spectrum 604 of the raw vibration signal 100 is rather noisy. This experiment and data demonstrates that the proposed methodology significantly facilitates the detection of an outer ring fault, for example.

Although the present invention has been described in accordance with preferred embodiments, it is obvious for the person skilled in the art that modifications are possible in all embodiments.

**Claims**

1. A method for detecting a fault in a machine (700), comprising the steps:

    a) receiving (S1) a vibration signal (100) recorded by one or more sensors (706) sensing a vibration of the machine (700) ;
    b) determining (S2) a true fault signal (102) by applying a neural network (104) to the vibration signal (100); and
    c) applying (S3) an envelope spectrum analysis (106) to the true fault signal (102) to detect the fault.

2. The method according to claim 1,
    wherein the neural network (104) in step b) is an unsupervised neural network.

3. The method according to claim 2,
    wherein the unsupervised neural network (104) is designed to determine the true fault signal (102) such that an impulsive component in the true fault signal (102) is maximized.

4. The method according to claim 2 or 3,
    wherein the unsupervised neural network (104) is designed to determine the true fault signal (102) such that a difference between the true fault signal (102) and the vibration signal (100) is minimized.

5. The method according to one of claims 2 - 4,

wherein the unsupervised neural network (104) is designed such that:

$$\min_{\theta}(\lambda_1 d(SEN_\theta(x), x) - \lambda_2 imp(SEN_\theta(x)))$$

wherein:

$\lambda_1$ and $\lambda_2$ are hyperparameters,
$SEN_\theta$ is the unsupervised neural network (104),
$x$ is the vibration signal (100),
$\theta$ is a set of parameters including the weights and biases of $SEN_\theta$, wherein $\theta$ is adjusted during unsupervised learning, d() is a distance function configured to determine the difference between the true fault signal (102) and the vibration signal (100), and
imp() is a function to determine the impulsive component in the true fault signal (102).

6. The method according to claim 5,
wherein the function d() is designed to determine the L1 norm, the Euclidean norm, distances in the frequency spectrum and/or kernel based distances.

7. The method according to claim 5 or 6,
wherein the function d() is a further neural network.

8. The method according to one of claims 5 - 7,
wherein the function imp() is designed to determine kurtosis, entropy or non-gaussianity.

9. The method according to one of claims 2 - 8,
wherein the unsupervised neural network (104) is a deep, convolutional or recurrent neural network.

10. The method according to one of claims 1 - 9,
wherein the envelope spectrum analysis (106) comprises:

determining a vibration envelope spectrum (602) of the true fault signal (102), and
determining one or more significant frequencies (606, 606-1, 606-2) in the vibration envelope spectrum (602) and associating the one or more significant frequencies (606, 606-1, 606-2) with known fault frequencies.

11. The method according to one of claims 1 - 10,
wherein the machine (700) comprises a rotating machine element (708).

12. A monitoring system (750) for detecting a fault in a machine (700), comprising:

a receiving unit (752) for receiving a vibration signal (100) recorded by one or more sensors (706) sensing a vibration of the machine (700);
a determining unit (754) for determining a true fault signal (102) by applying a neural network (104) to the vibration signal (100); and
an application unit (756) for applying an envelope spectrum analysis (106) to the true fault signal (102) to detect the fault.

13. A computer program product comprising instructions which, when the program is executed by a computer, cause the computer to carry out the method of one of claims 1 - 11.

FIG 1

100  104  102  106  108

EP 4 345 561 A1

FIG 2

S1

S2

S3

FIG 3

FIG 4

--- raw vibration signal 100
—— true fault signal 102

FIG 5

500

## FIG 6

Legend:
- – – – raw envelop spectrum ← 604
- —— true fault envelop spectrum ← 602
- ·········· BPFO and harmonics

Labels on plot: 600, 600-1, 600-2, 606, 606-1, 606-2

Y-axis: 0.00, 0.01, 0.02, 0.03, 0.04, 0.05
X-axis: 0, 250, 500, 750, 1000, 1250, 1500, 1750, 2000

## FIG 7

Labels: 750, 702, 706, 700, 704, 708, 752, 754, 756

EP 4 345 561 A1

Europäisches
Patentamt

European
Patent Office

Office européen
des brevets

# EUROPEAN SEARCH REPORT

Application Number

EP 22 19 9106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZONGZHEN ZHANG ET AL: "A novel compound fault diagnosis method using intrinsic component filtering", MEASUREMENT SCIENCE AND TECHNOLOGY, IOP, BRISTOL, GB, vol. 31, no. 5, 26 February 2020 (2020-02-26), page 55103, XP020353036, ISSN: 0957-0233, DOI: 10.1088/1361-6501/AB62C5 [retrieved on 2020-02-26] | 1-3,9-13 | INV. G05B23/02 G01H1/00 |
| Y | * abstract * | 4 | |
| A | * Sections: 2. Convolutional sparse filtering; 3. The proposed method; 4. Simulation analysis; 5. Experimental analysis * | 5-8 | |
| Y | JIA XIAODONG ET AL: "Sparse filtering with the generalizedlp/lqnorm and its applications to the condition monitoring of rotating machinery", MECHANICAL SYSTEMS AND SIGNAL PROCESSING, vol. 102, 27 September 2017 (2017-09-27), pages 198-213, XP085228378, ISSN: 0888-3270, DOI: 10.1016/J.YMSSP.2017.09.018 | 4 | |
| A | * Section 3.1 Sparsity – reviews and revisit * | 5-8 | |
| A | US 11 220 999 B1 (CHENG FANGZHOU [US]) 11 January 2022 (2022-01-11) * the whole document * | 1-13 | |

TECHNICAL FIELDS SEARCHED (IPC)

G01H
G05B

The present search report has been drawn up for all claims

| Place of search | Date of completion of the search | Examiner |
|---|---|---|
| The Hague | 21 February 2023 | Mirkovic, Olinka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 9106

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2023

| Patent document cited in search report | | Publication date | Patent family member(s) | | Publication date |
|---|---|---|---|---|---|
| US 11220999 | B1 | 11-01-2022 | EP | 3964908 A1 | 09-03-2022 |
| | | | JP | 2022042498 A | 14-03-2022 |
| | | | US | 11220999 B1 | 11-01-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIU, R. ; YANG, B. ; ZIO, E. ; CHEN, X.** Artificial intelligence for fault diagnosis of rotating machinery: A review. *Mechanical Systems and Signal Processing,* 2018, vol. 108, 33-47

- **RANDALL, R. B. ; ANTONI, J.** Rolling element bearing diagnostics-A tutorial. *Mechanical systems and signal processing,* 2011, vol. 25 (2), 485-520